# EUROPÄISCHE PATENTSCHRIFT

(11) **EP 1 266 465 B1**
(45) Veröffentlichungstag und Bekanntmachung des Hinweises auf die Patenterteilung: **12.05.2004**
(21) Anmeldenummer: 00981377.5
(22) Anmeldetag: 14.12.2000
(51) Int. Cl.: H04B 7/26, H04J 3/24

(54) **VERFAHREN ZUM ÜBERTRAGEN VON SPRACHDATENPAKETEN**
METHOD FOR TRANSMITTING VOICE DATA PACKETS
PROCEDE POUR LA TRANSMISSION DE PAQUETS DE DONNEES VOCALES

(30) Priorität: 22.03.2000 DE 10014064
(43) Veröffentlichungstag der Anmeldung: 18.12.2002
(73) Patentinhaber: Rohde & Schwarz GmbH & Co. KG, D-81671 München (DE)
(72) Erfinder: LIPP, Friedrich, A-5322 Hof bei Salzburg (AT)
(74) Vertreter: Körfer, Thomas, Dipl.-Phys.
(86) Internationale Anmeldenummer: PCT/EP2000/012749
(87) Internationale Veröffentlichungsnummer: WO 2001/071945

(56) Entgegenhaltungen:
- WO-A-98/59436
- GB-A- 2 321 160
- MATICH G E ET AL: "THE APPLICATION OF SOFTWARE RADIO TECHNIQUES FOR AIRBONE PASSENGER TELEPHONY AND FUTURE ATC COMMUNICATION SYSTEMS" IEE COLLOQIUM ON AIR-TO-GROUND COMMUNICATIONS, 25. November 1997 (1997-11-25), Seiten 4/1-11, XP000991420 LONDON, UK
- ISHIDA H ET AL: "A MULTIPLEXING METHOD IN CONSIDERATION OF CELL DELAY VARIATION" INTERNATIONAL CONFERENCE ON COMMUNICATIONS (ICC),US,NEW YORK, IEEE, Bd. -, 1. Mai 1994 (1994-05-01), Seiten 1501-1505, XP000438746

## Beschreibung

Die Erfindung betrifft ein Verfahren zum Übertragen von Sprachdatenpaketen zwischen Sprachdateneingängen mehrerer Kanäle und zumindest einer Sendeeinrichtung, insbesondere einer Sendeeinrichtung für den VDL (VHF-Digital-Link-) Flugfunk. Solche Flugfunk-Sendeeinrichtungen werden für die digitale Sprachübertragung und die Übertragung weiterer digitaler Daten zwischen einer Bodenstation und in Flugzeugen befindlichen mobilen Stationen verwendet und sind allgemein aus dem Dokument 'THE APPLICATION OF SOFTWARE RADIO TECHNIQUES FOR AIRBONE PASSENGER TELEPHONY AND FUTURE ATC COMMUNICATION SYSTEMS', von MATICH G E ET AL, IEE COLLOQIUM ON AIR-TO-GROUND COMMUNICATIONS, 25. November 1997, Seiten 4/1-11, XP000991420 bekannt.

Dabei werden mehrere Sprachkanäle gleichzeitig verarbeitet. An Sprachdateneingängen zur Verfügung gestellte Sprachdatenpakete werden jeweils in einem Vocoder komprimiert. Diese komprimierten Datenpakete werden einer als RIU bezeichneten Steuereinheit zugeführt und von dieser über ein Bussystem an eine von mehreren parallel arbeitenden Sendeeinrichtungen übertragen.

Es ist die Aufgabe der vorliegenden Erfindung, ein Verfahren zum Übertragen von Sprachdatenpaketen zwischen Sprachdateneingängen mehrerer Kanäle und zumindest einer Sendeeinrichtung anzugeben, welches eine Aussendung der Sprachdatenpakete durch die Sendeeinrichtung mit geringer Verzögerung ermöglicht.

Die Aufgabe wird durch die Merkmale des Anspruchs 1 gelöst.

Der Erfindung liegt die Erkenntnis zugrunde, daß zur Übertragung der Datenpakete zwischen der Steuereinheit und der Sendeeinrichtung bevorzugt ein freilaufendes, nicht synchronisiertes Übertragungsverfahren verwendet wird und die Datenpakete aller Kanäle auf einem gemeinsamen Datenbus übertragen werden. Ein Link-Prozessor der Sendeeinrichtung fügt eine bestimmte Anzahl der auf dem Datenbus zuletzt übertragenen komprimierten Datenpakete eines bestimmten Kanals zu einem Sendeblock (Burst) zusammen, wobei mit der Zusammensetzung zu dem Sendeblock bereits begonnen wird, wenn das letzte zu diesem Sendeblock gehörende Datenpaket noch nicht übertragen ist und dieser noch nicht vollständige Sendeblock bereits ausgesandt wird. Sobald das letzte über den Datenbus übertragenen Datenpaket den Link-Prozessor der Sendeeinrichtung erreicht, wird dieses während der bereits laufenden Aussendung des Sendeblocks an diesen noch angefügt, so daß der Sendeblock vollständig übertragen werden kann.

Die Ansprüche 2 bis 7 betreffen vorteilhafte Weiterbildungen der Erfindung.

Das Zusammenfassen der komprimierten Datenpakete erfolgt auf einen in festen Zeitabständen erzeugten Startimpuls. Dabei kann das Problem auftreten, daß das vorletzte Datenpaket in einem engen Toleranzbereich um den Zeitpunkt dieses Startimpulses von dem Link-Prozessor empfangen wird. Da der Empfangszeitpunkt dieses Datenpakets gewissen Laufzeitschwankungen unterworfen ist (Jitter), können Situationen auftreten, bei welchen dieses vorletzte Datenpaket bereits vor dem Startimpuls oder erst nach dem Startimpuls empfangen wird und deshalb keine eindeutige Zuordnung gegeben ist. Entsprechend einer Weiterbildung der Erfindung wird deshalb vorgeschlagen, den Zeitpunkt des Startimpulses um einen konstanten Zeitversatz vorzuverlegen, wenn festgestellt wird, daß der Zeitpunkt des Empfangs dieses vorletzten Datenpaketes innerhalb dieses Toleranzbereiches um den Zeitpunkt des ursprünglichen Startimpulses liegt.

Der Prozessor der Sendeeinrichtung umfaßt vorzugsweise einen mit dem Datenbus verbundenen Vorprozessor, einen Hauptprozessor, ein Schieberegister und eine Zeitsteuereinheit. Die Zeitsteuereinheit überträgt in konstanten Zeitabständen einen Startimpuls an den Hauptprozessor, woraufhin der Hauptprozessor die letzten n-1 von dem Vorprozessor über den Datenbus empfangene komprimierten Datenpakete übernimmt, zu einem aus n-1 komprimierten Datenpaketen bestehenden Sende-Teilblock zusammensetzt und in dem Schieberegister ablegt. Somit kann bereits die Aussendung dieses Sende-Teilblocks erfolgen. Sobald der Vorprozessor das letzte, d. h. n-te, Datenpaket von dem Datenbus empfangen hat, sendet dieser einen entsprechenden Steuerbefehl (Interrupt) an den Hauptprozessor, woraufhin der Hauptprozessor von dem Vorprozessor das noch fehlende letzte Datenpaket übernimmt und in dem Schieberegister der vollständige Sendeblock zur Verfügung gestellt wird. Die Daten des Schieberegisters können über einen weiteren Datenbus an einen digitalen Signalprozessor (DSP) der Sendeeinrichtung übertragen werden, der die Daten dem Modulator, beispielsweise einem I/Q-Modulator, der Sendeeinrichtung zuführt.

Ein Ausführungsbeispiel der Erfindung wird nachfolgen unter Bezugnahme auf die Zeichnung näher beschrieben. In der Zeichnung zeigen:
- Fig. 1: ein Blockschaltbild einer Sende-Empfangs-Einrichtung für VDL-Flugfunk;
- Fig. 2: ein detailliertes Blockschaltbild der Sendeeinrichtung;
- Fig. 3: ein Schema zur Erläuterung der Sende- und Empfangs-Blöcke (Bursts);
- Fig. 4: ein Schema zur Erläuterung der Sprachübertragung und der Zusammensetzung der Sprachlaufzeit;
- Fig. 5: ein Schema zur Erläuterung der Vorgänge auf dem PCM-Datenbus in zeitlicher Relation zu den Sende-Empfangs-Blöcken (Bursts); und
- Fig. 6: ein Schema zur Erläuterung des automatischen Startpuls-Versatzes.

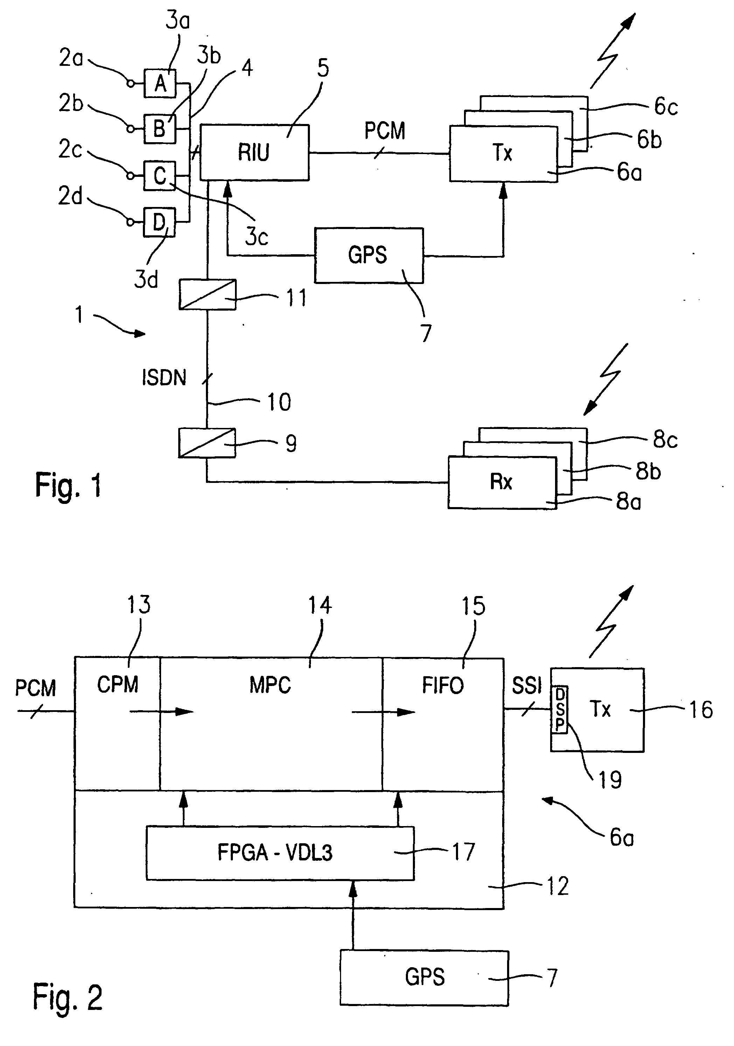

Fig. 1 zeigt ein schematisches Blockschaltbild einer Sendeund Empfangseinrichtung 1, die insbesondere für VDL (VHF-Digital-Link)-Flugfunk eingesetzt werden kann. Die einzelnen Operators, beispielsweise Fluglotsen, sind mit den Sprachdateneingängen bzw. Sprachdatenausgängen 2a, 2b, 2c, 2d beispielsweise über nicht dargestellte Mikrophone und Kopfhörer, nicht dargestellte Verstärker und Analog-Digital-Wandler verbunden, so daß die Sprachdateneingänge 2a bis 2d digitale Sprachdatenpakete empfangen. Im dargestellten Ausführungsbeispiel sind insgesamt vier Sprachdateneingänge 2a bis 2d vorhanden, die vier Kanälen A, B, C und D zugeordnet sind. Jeder Kanal A, B, C, D verfügt über einen Vocoder 3a, 3b, 3c bzw. 3d. In den Vocodern 3a bis 3d werden die Sprachdaten komprimiert und redundante Daten beseitigt bzw. ein Vocoderspezifischer Fehler-Korrektur-Code angefügt. Die komprimierten Datenpakete werden über einen Datenbus 4 einer zentralen Steuereinheit 5 zugeführt, die allgemein als RIU (Radio Interface Unit) bezeichnet wird. Die Steuereinheit RIU 5 ist über einen PCM (Puls Code Modulation) - Datenbus mit mehreren Sendeeinrichtungen Tx 6a, 6b, 6c verbunden, die zu festgelegten Zeiten in bestimmter Weise konfigurierte Sendeblöcke (Bursts) abstrahlen. Ein Zeitnormalempfänger 7, beispielsweise ein Empfänger für das GPS-System, ist sowohl mit der Steuereinrichtung RIU 5 als auch mit den Sendeeinrichtungen 6a bis 6c verbunden.

Mehrere Empfangseinrichtungen Rx 8a, 8b, 8c befinden sich zu frequenzmäßigen Entkopplung in einiger Entfernung von den Sendeeinrichtungen 6a bis 6c und sind über einen Datenwandler 9 mit einer Datenleitung 10 verbunden, die wiederum über einen Datenwandler 11 mit der Steuereinheit RIU 5 in Verbindung steht. Bei der Datenleitung 10 kann es sich beispielsweise um mehrere ISDN-Telefonleitungen handeln.

Fig. 2 zeigt ein detaillierteres Blockschaltbild einer Sendeeinrichtung 6a. Die Sendeeinrichtung 6a umfaßt einen Link-Prozessor 12, der einen mit dem PCM-Datenbus verbundenen Vorprozessor 13, einen Hauptprozessor 14 und ein Schieberegister 15 umfaßt. Der Vorprozessor 13 ist als Risk-Prozessor ausgebildet und wird auch als CPM (Communication Processor Module) bezeichnet. Der Hauptprozessor wird auch als MPC (Main PC) bezeichnet und ist mit dem als FIFO (first in - first out) ausgebildeten Schieberegister 15 verbunden. Das Schieberegister 15 steht über einen weiteren Datenbus, der als SSI-Datenbus bezeichnet wird, mit dem digitalen Signalprozessor (DSP) 17 des eigentlichen Senders 16 in Verbindung.

Eine Zeitsteuereinheit 17 ist mit dem Zeitnormalempfänger 7 verbunden. Die Baugruppe der Zeitsteuereinheit 17 wird auch als FPGA-VDL3 bezeichnet. Die Zeitsteuereinheit 17 überträgt in konstanten Zeitabständen einen Startimpuls an den Hauptprozessor 14. Der Startimpuls ist fest mit dem TDMA-Rahmen gekoppelt und wird je nach Verarbeitungsdauer der Sendepaketaufbereitung zeitlich vorgehalten. Die Startimpulse werden für die im Ausführungsbeispiel vier Kanäle A, B, C und D zu unterschiedlichen Zeiten generiert. Der Hauptprozessor 14 übernimmt nach Empfang eines Startimpulses für den zugeordneten Kanal von dem Vorprozessor 13 n-1 über dem PCM-Datenbus zuletzt empfangener Datenpakete. Besteht ein Sendeblock (Burst) beispielsweise aus insgesamt sechs komprimierten Datenblöcken für einen bestimmten Kanal, so übernimmt der Hauptprozessor 14 von dem Vorprozessor 13 zunächst nur fünf solcher Datenpakete. Der Hauptprozessor beginnt bereits unmittelbar nach der Übernahme dieser fünf Datenpakete mit dem sogenanntem Scrambling, d. h. dem Zusammenfassen der Datenpakete in dem Sendeblock und der Kodierung zu Modulationsdaten, und fügt die Sprachsymbole an den bereits zuvor gebildeten Sprach-Burstheader an. Der dabei erzeugte Sende-Teilblock (Teil-Burst) wird in dem Schieberegister 15 abgelegt und kann bereits jetzt über den SSI-Datenbus zu dem digitalen Signalprozessor 17 des Senders 16 übertragen werden und zur Aussendung gelangen. Die Zeitsteuereinheit 17 sendet weitere Startimpulse an das Schieberegister 15, um den Zeitpunkt festzulegen, zu welchem die Daten von dem Schieberegister 15 über den SSI-Datenbus an den Sender 16 übertragen werden. Sobald der Vorprozessor das noch fehlende sechste (allgemein n-te) Datenpaket über den PCM-Datenbus empfangen hat, sendet er einen entsprechenden Steuerbefehl (Interrupt) an den Hauptprozessor 14, so daß der Hauptprozessor 14 das noch fehlende letzte Datenpaket von dem Vorprozessor 13 übernimmt, das Scrambling und die notwendige Kodierung durchführt und das gescrambelte Datenpaket dem bereits erzeugten Sende-Teilblock anfügt, so daß ein vollständiger Sendeblock (Burst) entsteht.

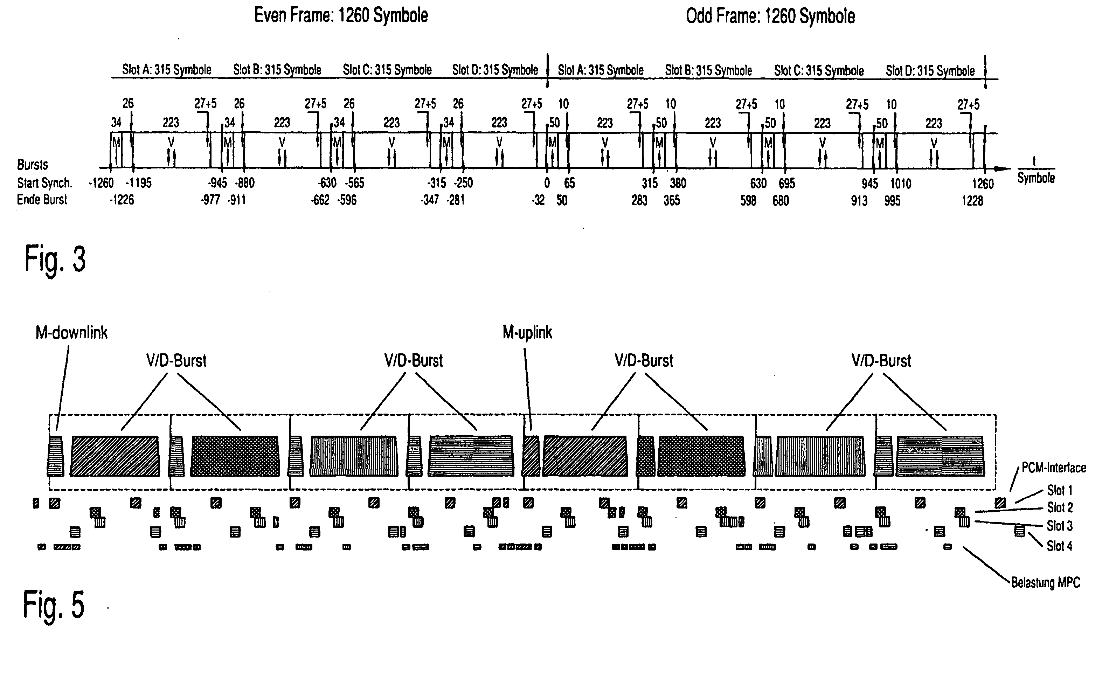

Fig. 3 zeigt die Sendeblöcke (Bursts), die üblicherweise beim VDL-Flugfunk verwendet werden, als Funktion der Zeit t, wobei die Zeitachse mit der Anzahl der übertragenen Datensymbole skaliert ist. Datenrahmen (Frames) zu je 1.260 Symbole gliedern sich in vier sogenannten Management-Bursts (M) und vier Sprachdaten-Bursts (V). Der für jeden Sendeblock (Burst) angegebene Pfeil kennzeichnet die Übertragungsrichtung. Ein Pfeil nach oben bedeutet Übertragung von der Bodenstation zu der sich im Flugzeug befindlichen Station. Umgekehrt bedeutet ein nach unten gerichteter Pfeil eine Übertragung von der Station im Flugzeug zu der in Fig. 1 dargestellten Bodenstation. Die Sprachdatenbursts V können je nach Situation in beide Richtungen übertragen werden. Die Sendeblöcke müssen in einem starren TDMA-Schema abgesandt werden (circuit mode). Die Sendeeinrichtungen 6a, 6b, 6c sorgen für eine bestmögliche Übernahme der Vocoder-Pakete. Die Steuereinheit RIU 5 bleibt von dieser Aufgabe unbelastet.

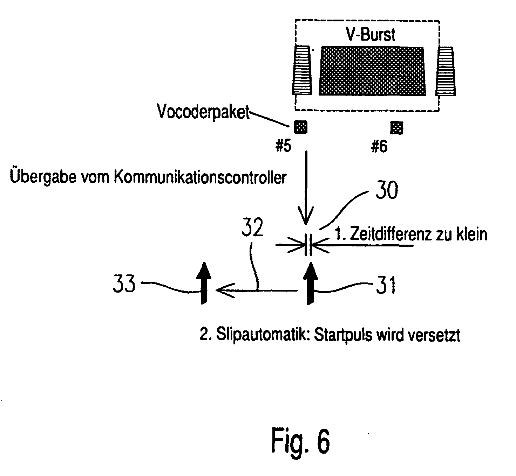

Fig. 5 zeigt ebenfalls ein Zeitdiagramm, wobei im oberen Bereich die Sendeblöcke (Bursts) dargestellt sind und im unteren Bereich in zeitlicher Relation dazu die Datenbelegung auf dem PCM-Datenbus. Die zu unterschiedlichen Kanälen A, B, C und D gehörenden Daten sind unterschiedlich schraffiert. Erkennbar ist, daß die Daten unterschiedlicher Kanäle und unterschiedlicher Sende-Bursts in unterschiedlichen Slots des PCM-Datenbusses übertragen werden. Die jeweils sechs zuletzt auf dem PCM-Datenbus übertragenen Datenpakete werden einem V/D-Burst zugeordnet. Dabei werden die komprimierten Datenpakete sämtlicher Kanäle erfindungsgemäß auf dem PCM-Datenbus freilaufend, d. h. ohne Synchronisierung übertragen. Zeitverzögerungen, die üblicherweise bei Synchronisierungsprozeduren auftreten, werden dadurch vermieden. Das Scrambling eines Sendeblocks, d. h. das Zusammenfassen der Datenpakete und die Kodierung kann bereits beginnen, wenn erst fünf der insgesamt sechs Datenpakete über dem PCM-Datenbus übertragen sind, wobei das noch fehlende sechste Datenpaket erst zugefügt wird, wenn die Aussendung des Sendeblocks (Burst) bereits begonnen hat. Erkennbar wird dies bei einer Betrachtung der Belastung des Hauptprozessors MPC (14 in Fig. 2), die in Fig. 5 ebenfalls angegeben ist. Dabei wird deutlich, daß die Belastung hauptsächlich vor der Übertragung des Bursts gegeben ist, nämlich dann, wenn die bereits vorhandenen fünf Datenpakete gescrambelt werden. Wenn das noch fehlende sechste Datenpaket dieses Kanals eintrifft, so tritt unmittelbar danach nochmals eine kurze Belastung des Hauptprozessors MPC auf. Selbst wenn das noch fehlende sechste Datenpaket erst zu einem Zeitpunkt bei dem Vorprozessor 13 ankommt, in welchem bereits die Hälfte des Sendeblocks (Burst) ausgesandt ist, so kann dieses noch fehlende Datenpaket noch in den Sendeblock (Burst) integriert werden. Durch diese erfindungsgemäße Maßnahme wird die Zeitverzögerung der gesamten Übertragungstrecke wesentlich reduziert.

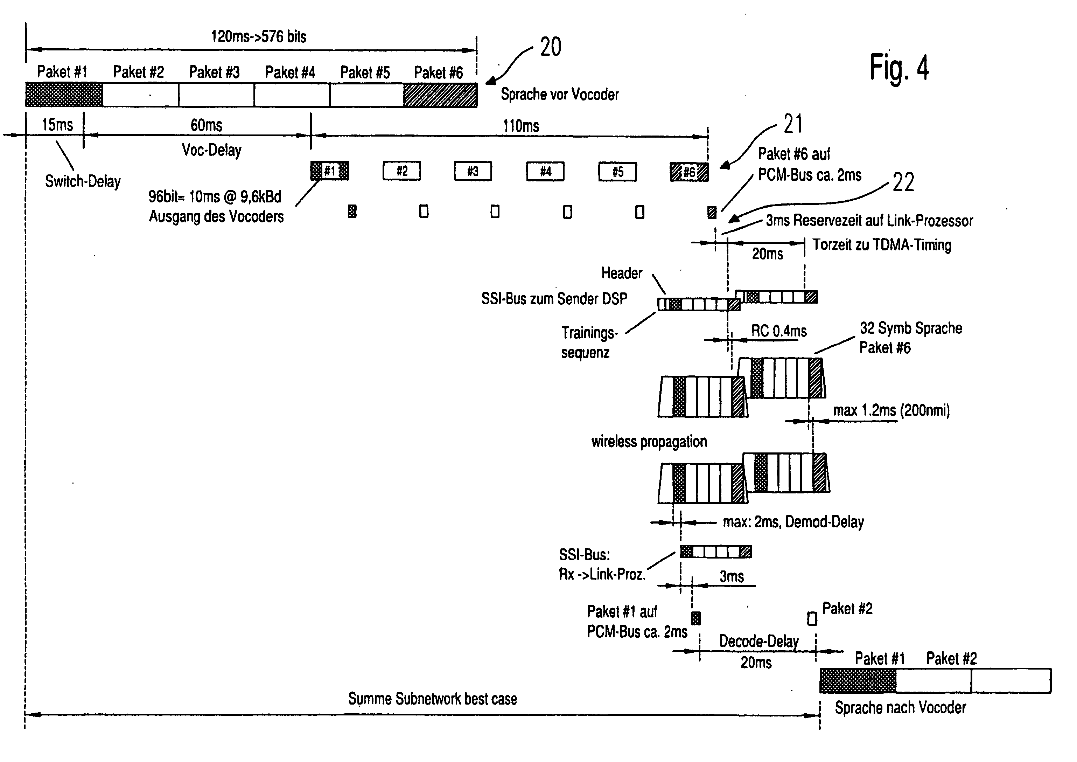

Fig. 4 zeigt die zeitlichen Verhältnisse bei der Übertragung der Sprachdaten von den Sprachdateneingängen 2a bis 2d zu der Sendeeinrichtung bis zur Erzeugung der Sendebursts. Umgekehrt ist auf der Empfängerseite die Zeitverzögerung von dem Empfang eines Bursts bis zur Wiedergabe der Sprachdaten an den Sprachdatenausgängen 2a bis 2d dargestellt. Vor den Vocodern 3a bis 3d liegen die noch unkomprimierten Datenpakete 20 vor. Nach einer Verzögerungszeit, die sich durch die Sende-Empfangsumschaltung (Switch-Delay) und die Verzögerung der Vocoder (Voc-Delay) ergibt, liegen die Sprachdatenpakete in ihrer komprimierten Form 21 am Ausgang der Vocoder 3a bis 3d vor. Nach einer Bearbeitungsverzögerung der Steuereinheit RIU befinden sich die komprimierten Datenpakete auf dem PCM-Datenbus, was durch den Pfeil 22 gekennzeichnet ist. Sobald die ersten fünf der insgesamt sechs zu einem Burst gehörenden Sprachdatenpaket von dem Vorprozessor CPM 13 empfangen worden sind und der Hauptprozessor MPC 14 den Startimpuls erhalten hat, beginnt der Hauptprozessor MPC 14 mit dem Scrambling dieser bereits vorliegenden fünf Datenpakete. Diese fünf Datenpakete sind mit #1, #2, #3, #4 und #5 gekennzeichnet. Sobald das sechste Datenpaket #6 den Vorprozessor CPM 13 erreicht hat, wird dieses sofort an den Hauptprozessor MPC 14 übertragen und noch während der Aussendung des Bursts in diesen Burst integriert. Die Datenpakete werden von dem Hauptprozessor 14 vor der Übertragung über den SSI-Datenbus zum Sender 16 noch mit einer Trainingssequenz und einem Header versehen.

Nach der drahtlosen Übertragung erfolgt auf der Empfängerseite die umgekehrte Prozedur. Die empfangenen Bursts werden dekodiert und über einen SSI-Datenbus dem Link-Prozessor des Empfängers zugeleitet, der die komprimierten Datenpakete über einen PCM-Datenbus bzw. die Datenleitung 10 der Steuereinheit RIU zuführt, die diese entsprechend den Kanälen A, B, C, D auf die einzelnen Vocoder 3a bis 3d verteilt. In den Vocodern 3a bis 3d werden die Datenpaket wieder dekomprimiert.

Fig. 6 zeigt eine bevorzugte Weiterbildung der Erfindung. Bei der erfindungsgemäßen Vorgangsweise, das Scrambling für die ersten fünf Datenpakete (allgemein n-1 Datenpakete) bereits dann zu beginnen, wenn der Hauptprozessor MPC 14 von der Zeitsteuereinheit 17 einen Startimpuls erhält, tritt das Problem auf, daß die Zuordnung der Datenpakete zu einem Sendeblock (V-Burst) schwanken kann. Wie erläutert kann eine Reduktion der Übertragungslaufzeit erfindungsgemäß dadurch erreicht werden, daß die komprimierten Datenpakete auf dem PCM-Datenbus freilaufend, d. h. ohne Synchronisation, übertragen werden. Die zeitliche Anordnung der komprimierten Datenpakete in Bezug auf die fest vorgebende Sendezeit der Bursts ist deshalb undefiniert. Dies ist grundsätzlich nicht störend, da entsprechend der erfindungsgemäßen Vorgehensweise grundsätzlich zunächst die letzten fünf Datenpakete gescrambelt werden und das noch fehlende sechste Datenpaket später hinzugefügt wird und zwischen zwei Bursts nicht mehr als sechs Datenpakete übertragen werden. Daher ist normalerweise sichergestellt, daß sämtliche Datenpakete lückenlos übertragen werden. Probleme treten jedoch dann auf, wenn eines der komprimierten Datenpakete in enger zeitlicher Nachbarschaft zu dem Startimpuls von dem Link-Prozessor 12 empfangen wird. Da die Übertragung der komprimierten Datenpakete gewissen zeitlichen Schwankungen (Jitter) unterworfen ist, kann es vorkommen, daß das fünfte Datenpaket einmal vor dem Startimpuls und ein anderesmal nach dem Startimpuls übertragen wird. Die Zuordnung der Datenpakete zu den Bursts kann deshalb springen und es besteht die Gefahr, daß bei einem solchen Sprung ein Datenpaket überhaupt nicht und ein anderes Datenpaket doppelt übertragen wird.

Um dies zu verhindern, wird entsprechend der bevorzugten erfindungsgemäßen Weiterbildung vorgeschlagen, in einem Fall, in welchem der Zeitpunkt des Empfangs des vorletzten Datenpakets, d. h. des fünften Datenpakets, innerhalb eines vorgegebenen Toleranzbereichs 30 um den Zeitpunkt des ursprünglichen vorgesehenen Startimpulses 31 liegt, den Startimpuls um einen konstanten Zeitversatz 32 zu versetzen und somit statt des ursprünglich vorgesehenen Startimpulses 31 einen versetzten Startimpuls 33 zu verwenden. Wenn der Zeitversatz 32 kleiner als der zeitliche Abstand zwischen zwei benachbarten Datenpaketen bemessen ist, so wird eine geeignete, sichere Lage des Startimpulses erreicht.

Nach dem Einschalten der Sendeeinrichtungen 6a, 6b, 6c und ab dem Vorhandensein der Vocoder-Sprachdatenpakete an dem PCM-Bus kann diese Korrekturmaßnahme vorgenommen werden. Vorteilhafterweise werden testweise Vocoder-Pakete entsprechend dem Vocoder-Rythmus übertragen, so daß lange bevor die Sendeeinrichtung 6a, 6b, 6c erstmalig einen Sprach-Burst aussendet, die Startimpulse optimal definiert sind. Eine Sprachburst-Aussendung wird immer nur dann erfolgen, wenn ein entsprechender Sprachburst-Header von der Steuereinheit RIU 5 zu der betreffenden Sendeeinrichtung 6a, 6b, 6c übertragen wurde. Solange der Fluglotse nicht spricht und keine PTT (Push To Talk)-Taste gedrückt hat, werden die Mikrophone stumm geschaltet, wodurch die ständig aktivierten Vocoder-Sprachpakete mit "Stumminformation" weitergeleitet werden. Die Sendeeinrichtung 6a, 6b, 6c kann anhand des Vocoder-Rythmuses die anhand von Fig. 6 beschriebene "Slip-Automatik" gleich nach dem Hochfahren der Sendeeinrichtung 6a, 6b, 6c als einmalige Korrekturmaßnahme durchführen.

Das Zeitfenster und der Zeitversatz richten sich nach der Qualität der Vocoder-PCM-Zubringung und werden vorteilhafterweise großzügig dimensioniert. Wenn die anhand von Fig. 6 beschriebene "Slip-Automatik" tatsächlich ausgelöst wird, stehen zuvor Vocoder 2a, 2b, 2c, 2d und TDMA-Rythmus im besten Zustand (best case) zeitlich zueinander. Nach Hinzuschalten der "Slip-Automatik" wird dann die Sprachverzögerung im in Fig. 4 dargestellten Ausführungsbeispiel um 20 ms vergrößert, d. h. um eine Paketlänge, und es entsteht der ungünstigste Zustand (worst case). Jedoch besteht dann keine Gefahr mehr, daß die Sprache unkontinuierlich übertragen wird.

Die vorstehend genannte Prozedur muß für jeden Kanal A, B, C und D getrennt vorgenommen werden, da die Startimpulse für diese Kanäle zu unterschiedlichen Zeiten generiert werden und die Datenpakete für jeden Kanal zu unterschiedlichen Zeiten übertragen werden, so daß die relative zeitliche Lage der Übertragung der Datenpakete in Bezug auf den Startimpuls für jeden Kanal unterschiedlich sein kann.

Die Erfindung ist nicht auf das dargestellte Ausführungsbeispiel und insbesondere nicht auf eine Anwendung bei VDL-Flugfunk beschränkt. Die Abgabe der komprimierten Datenpakete durch die Vocoder 2a, 2b, 2c, 2d kann durch einen Synchronisationspuls synchronisiert werden, um die Effizienz der Übertragung weiter zu steigern. Im in Fig. 4 dargestellten Ausführungsbeispiel würde ein solcher Synchronisationspuls alle 20 ms von der Sendeeinrichtung 6a, 6b, 6c zu dem betreffendem Vocoder 2a, 2b, 2c, 2d übertragen werden. Dies würde bewirken, daß die Vocoder ihre komprimierten Datenpakete zu definierten Zeiten aussenden, die an das in der Sendeeinrichtung 6a, 6b, 6c erfolgende Scrambling optimal angepaßt sind. Eine optimale Anpassung ist dann gegeben, wenn das im Ausführungsbeispiel fünfte Datenpaket gerade kurz vor dem Beginn der Scrambling-Prozedur ankommt. Dabei sollte ein Sicherheitsabstand so bemessen sein, daß die anhand von Fig. 6 beschriebene "Slip-Automatik" gerade noch nicht anspricht.

## Patentansprüche

1. Verfahren zum Übertragen von digitalen Sprachdatenpaketen zwischen Sprachdateneingängen (2a, 2b, 2c, 2d) mehrerer Kanäle (A, B, C, D) und zumindest einer Sendeeinrichtung (6a) mit folgenden Verfahrensschritten:
- Komprimieren der Sprachdatenpakete in einem jedem Kanal (A, B, C, D) zugeordneten Vocoder (2a, 2b, 2c, 2d) zu komprimierten Datenpaketen,
- Zuführen der komprimierten Datenpakete eines jeden Kanals (A, B, C, D) zu einer Steuereinheit (5) ,
- freilaufende, unsynchronisierte Übertragung der komprimierten Datenpakete auf einem allen Kanälen (A, B, C, D) gemeinsamen Datenbus (PCM) von der Steuereinheit (5) zu einem der mindestens einer Sendeeinrichtung (6a) zugeordneten Prozessor (12) und
- Zusammenfassen einer bestimmten Anzahl der auf dem Datenbus (PCM) zuletzt übertragenen, komprimierten Datenpakete (#1,...,#5) eines bestimmten Kanals (A, B, C, D) zu einem Sendeblock (V/D-Burst) mittels des Prozessors (12), **dadurch gekennzeichnet daß** ein letztes komprimiertes Datenpaket (#6) dem Sendeblock (V/D-Burst) erst in einem Zeitpunkt zugefügt wird, in welchem die Aussendung des Sendeblocks (V/D-Burst) bereits begonnen hat.

2. Verfahren nach Anspruch 1,
**dadurch gekennzeichnet,**
**daß** das Zusammenfassen der komprimierten Datenpakete auf einen in festen Zeitabständen erzeugten Startimpuls (31, 33) hin erfolgt, und
**daß** der Zeitpunkt des Startimpulses (33) um einen konstanten Zeitversatz (32) von dem Zeitpunkt eines ursprünglichen Startimpulses (31) verschoben wird, wenn der Zeitpunkt des Empfangs eines bestimmten komprimierten Datenpakets (#5) innerhalb eines vorgegebenen Toleranzbereichs (30) um den Zeitpunkt des ursprünglichen Startimpulses (31) liegt.

3. Verfahren nach Anspruch 2,
**dadurch gekennzeichnet,**
**daß** das bestimmte komprimierte Datenpaket das vorletzte Datenpaket (#5) ist, das dem Sendeblock (V/D-Burst), auf den sich der Startimpuls (31, 33) bezieht, zugeordnet wird.

4. Verfahren nach einem der Ansprüche 1 bis 3,
**dadurch gekennzeichnet,**
**daß** der Prozessor (12) einen mit dem Datenbus (PCM) verbundenen Vorprozessor (13), einen Hauptprozessor (14), ein Schieberegister (15) und eine Zeitsteuereinheit (17) aufweist,
**daß** die Zeitsteuereinheit (17) in konstanten Zeitabständen einen Startimpuls (31, 32) an den Hauptprozessor (14) überträgt, woraufhin der Hauptprozessor (14) die letzten n-1 von dem Vorprozessor (13) über den Datenbus (PCM) empfangenen, komprimierten Datenpakete (#1,...,#5) übernimmt, zu einem aus n-1 komprimierten Datenpaketen (#1,...,#5) bestehenden Sende-Teilblock zusammensetzt und in dem Schieberegister (15) ablegt, und
**daß** der Vorprozessor (13) einen Steuerbefehl an den Hauptprozessor (14) sendet, wenn dieser ein weiteres, n-tes komprimiertes Datenpaket (#6) über den Datenbus (PCM) empfangen hat, woraufhin der Hauptprozessor (14) das n-te Datenpaket (#6) mit dem Sende-Teilblock zu einem n Datenpakete (#1,... , #6) umfassenden Sendeblock (V/D-Burst) vereinigt und das Schieberegister (15) entsprechend ergänzt.

5. Verfahren nach Anspruch 4,
**dadurch gekennzeichnet,**
**daß** für jeden Kanal (A, B, C, D) die Startimpulse (31; 33) zu unterschiedlichen Zeiten erzeugt werden und daß der Hauptprozessor (14) von dem Vorprozessor (13) nur die zu dem durch den Startimpuls (31, 33) aktivierten Kanal (A, B, C, D) gehörigen komprimierten Datenpakete übernimmt.

6. Verfahren nach Anspruch 4 oder 5,
**dadurch gekennzeichnet,**
**daß** die in dem Schieberegister (15) gespeicherten Daten über einen weiteren Datenbus (SSI) an einen mit einem Modulator in Verbindung stehenden digitalen Signalprozessor (19) der Sendeeinrichtung (6a) übertragen werden.

7. Verfahren nach einem der Ansprüche 1 bis 6,
**dadurch gekennzeichnet,**
**daß** die Vocoder (2a, 2b, 2c, 2d) über einen Synchronisationspuls synchronisiert werden und die komprimierten Datenpakete von den Vocodern (2a, 2b, 2c, 2d) zu durch den Synchronisationspuls definierten Zeiten abgegeben werden.

## Claims

1. Method for transmitting digital voice data packets between voice data inputs (2a, 2b, 2c, 2d) of several channels (A, B, C, D) and at least one transmission device (6a) comprising the following procedural stages:
- compression of the voice data packets in a vocoder (2a, 2b, 2c, 2d) allocated to each channel (A, B, C, D) to form compressed data packets;
- supply of the compressed data packets from each channel (A, B, C, D) to a control unit (5),
- free-running, unsynchronised transmission of the compressed data packets via a data bus (PCM) common to all channels (A, B, C, D) from the control unit (5) to a processor (12) allocated to the at least one transmission device (6a)
and
- combination of a given number of the compressed data packets (#1, ..., #5) most recently transmitted via the data bus (PCM) from a given channel (A, B, C, D) to a transmission block (v/d burst) by means of the processor (12), **characterised in that** a last compressed data packet (#6) is only added to the transmission block (v/d burst) at a time, after which the transmission of the transmission block (v/d burst) has already begun.

2. Method according to claim 1,
**characterised in that**
the combination of compressed data packets takes place after a start pulse (31, 33) generated at fixed intervals, and
that, if the time of receiving of a given compressed data packet (#5) lies within a predetermined tolerance range (30) around the time of the original start pulse (31), the time of the start pulse (33) is shifted by a constant time offset (32) from the time of an original start pulse (31).

3. Method according to claim 2,
**characterised in that**
the given compressed data packet is the penultimate data packet (#5) allocated to the transmission block (v/d burst), which relates to the start pulse (31, 33).

4. Method according to any one of claims 1 to 3,
**characterised in that**
the processor (12) provides a pre-processor (13) connected to the data bus (PCM), a main processor (14), a shift register (15) and a time-control unit (17),
that the time-control unit transmits a start pulse (31, 32) at constant intervals to the main processor (14), whereupon the main processor (14) accepts transfer of the last n-1 compressed data packets (#1, ..., 5) received via the data bus (PCM) from the pre-processor (13), combines them to form a partial transmission block consisting of n-1 compressed data packets (#1, ..., #5) and stores them in the shift register (15), and
that the pre-processor (13) transmits a control command to the main processor (14), when the latter has received a further n-th compressed data packet (#6) via the data bus (PCM), whereupon the main processor (14) combines the n-th data packet (#6) with the partial transmission block to form a transmission block (v/d burst) comprising n data packets (#1, ..., #6) and supplements the shift register accordingly.

5. Method according to claim 4,
**characterised in that**
the start pulses (31; 33) are generated at different times for each channel (A, B, C, D), and that the main processor (14) only accepts transfer from the pre-processor (13) of those compressed data packets associated with the channel (A, B, C, D) activated by the start pulse (31, 33).

6. Method according to claim 4 or 5,
**characterised in that**
the data stored in the shift register (15) are transmitted via a further data bus (SSI) to a digital signal processor (19) of the transmission device (6a) connected to a modulator.

7. Method according to any one of claims 1 to 6,
**characterised in that**
the vocoders (2a, 2b, 2c, 2d) are synchronised via a synchronisation pulse, and the compressed data packets are released from the vocoders (2a, 2b, 2c, 2d) at times defined by the synchronisation pulse.

## Revendications

1. Procédé de transmission de paquets de données vocales numériques entre des entrées de données vocales (2a, 2b, 2c, 2d) de plusieurs canaux (A, B, C, D) et au moins un dispositif émetteur (6a), comprenant les étapes de procédé suivantes :
- compression des paquets de données vocales dans les vocodeurs (2a, 2b, 2c, 2d) affectés à chacun des canaux (A ; B ; C ; D) en paquets de données comprimées,
- envoi des paquets de données comprimées de chacun des canaux (A ; B ; C ; D) à une unité de commande (5),
- transmission libre, non synchronisée des paquets de données comprimées sur un bus de données (MIC) commun à tous les canaux (A, B, C, D) depuis l'unité de commande (5) à un processeur (12) affecté audit moins un dispositif émetteur (6a), et
- assemblage d'un nombre déterminé des paquets de données comprimées (#1, ..., #5) d'un canal donné (A, B, C, D) transmis en dernier sur le bus de données (MIC) en un bloc d'émission (salve V/D) au moyen du processeur (12),
**caractérisé en ce que**
un dernier paquet de données comprimées (#6) est ajouté au bloc d'émission (salve V/D) seulement à un moment où l'envoi du bloc d'émission (salve V/D) a déjà commencé.

2. Procédé selon la revendication 1,
**caractérisé en ce que**
l'assemblage des paquets de données comprimées s'effectue à la suite d'une impulsion de départ (31 ; 33) générée à intervalles fixes, et
**en ce que** le moment de l'impulsion de départ (33) est décalé d'une durée constante (32) par rapport au moment d'une impulsion de départ originelle (31) lorsque le moment de la réception d'un paquet de données comprimées défini (#5) se situe à l'intérieur d'une plage de tolérance prédéterminée (30) autour du moment de l'impulsion de départ originelle (31).

3. Procédé selon la revendication 2,
**caractérisé en ce que**
le paquet de données comprimées défini est l'avant-dernier paquet de données (#5) qui est affecté au bloc d'émission (salve V/D) auquel l'impulsion de départ (31 ; 33) se rapporte.

4. Procédé selon l'une des revendications 1 à 3,
**caractérisé en ce que**
le processeur (12) comprend un préprocesseur (13) relié au bus de données (MIC), un processeur principal (14), un registre à décalage (15) et une unité de synchronisation (17),
**en ce que** l'unité de synchronisation (17) transmet à intervalles constants une impulsion de départ (31 ; 32) au processeur principal (14), suite à quoi le processeur principal (14) réceptionne les derniers n-1 paquets de données comprimées (#1, ... ,#5) reçus par le préprocesseur (13) par l'intermédiaire du bus de données (MIC), les assemble en un bloc partiel d'émission composé de n-1 paquets de données comprimées (#1, ..., #5) et les stocke dans le registre à décalage (15), et
**en ce que** préprocesseur (13) envoie une commande au processeur principal (14) lorsqu'il a reçu un autre nième paquet de données comprimées (#6) par l'intermédiaire du bus de données (MIC), suite à quoi le processeur principal (14) regroupe le nième paquet de données (#6) avec le bloc partiel d'émission en un bloc d'émission (salve V/D) comprenant n paquets de données (#1, ..., #6) et complète en conséquence le registre à décalage (15).

5. Procédé selon la revendication 4,
**caractérisé en ce que**
pour chaque canal (A, B, C, D), les impulsions de départ (31 ; 33) sont générées à des temps différents et **en ce que** le processeur principal (14) réceptionne uniquement depuis le préprocesseur (13) les paquets de données comprimées appartenant au canal (A, B, C, D) activé par l'impulsion de départ (31 ; 33).

6. Procédé selon la revendication 4 ou la revendication 5,
**caractérisé en ce que**
les données stockées dans le registre à décalage (15) sont transmises par le biais d'un autre bus de données (SSI) à un processeur de signal numérique (19) du dispositif émetteur (6a) relié à un modulateur.

7. Procédé selon l'une des revendications 1 à 6,
**caractérisé en ce que**
les vocodeurs (2a, 2b, 2c, 2d) sont synchronisés au moyen d'une impulsion de synchronisation et **en ce que** les paquets de données comprimées des vocodeurs (2a, 2b, 2c, 2d) sont délivrés à des moments définis par l'impulsion de synchronisation.
